# EUROPÄISCHE PATENTSCHRIFT

(11) **EP 0 518 095 B1**
(45) Veröffentlichungstag und Bekanntmachung des Hinweises auf die Patenterteilung: **27.07.1994**
(21) Anmeldenummer: 92108571.8
(22) Anmeldetag: 21.05.1992
(51) Int. Cl.: B23Q 11/00

(54) **Transport- und Zerkleinerungsvorrichtung**
Transport and crushing device
Dispositif de transport et de broyage

(30) Priorität: 07.06.1991 DE 9107034 U
(43) Veröffentlichungstag der Anmeldung: 16.12.1992
(73) Patentinhaber: SCHEIBLE-VERSORGUNGSANLAGEN GMBH, D-73312 Geislingen (DE)
(72) Erfinder: Maier, Werner, W-7345 Deggingen (DE)
(74) Vertreter: Lorenz, Werner, Dipl.-Ing.

(56) Entgegenhaltungen:
- EP-A- 0 096 009
- EP-A- 0 410 808
- FR-A- 1 537 689
- GB-A- 2 094 662
- PATENT ABSTRACTS OF JAPAN vol. 4, no. 57 (M-9)(539) 26. April 1980 & JP-A-55 24 854

## Beschreibung

Die Erfindung betrifft eine Transport- und Zerkleinerungsvorrichtung für Späne und Kühlmittel zur Entsorgung von flüssigen Medien mit Produktionsrückständen aus der Industrie, mit einem Auffangbehälter, der mit einer Transportpumpe versehen ist, und auf den eine Sieb- und Austragseinrichtung zum Sieben des Mediums und zum Transportieren der gröberen Bestandteile in Richtung auf einen Austrag, aufgesetzt ist.

In der DE-A-39 26 700 ist ein Verfahren und eine Vorrichtung zur Entsorgung von flüssigen Medien mit Produktionsrückständen beschrieben, wobei von dem jeweiligen Anfallsort aus über Rohrleitungen das zu entsorgendende Medium abtransportiert wird. Hierzu wird es von einem Auffangbehälter aus über eine Transportpumpe von dem jeweiligen Anfallsort aus zu einem hochliegenden Einlaufhochbehälter gepumpt, von wo aus es kontinuierlich oder diskontinuierlich über ein geschlossenes Rohrleitungssystem zu einem tieferliegenden Sammelbehälter weitergeleitet wird. Jeweils einer oder mehreren Werkzeugmaschine(n) ist dabei ein Auffangbehälter zugeordnet, von dem aus das zu entsorgende Medium über die Transportpumpe(n) zu dem Einlaufhochbehälter gepumpt wird.

Eine weitere die Merkmale des Oberbegriffs des Anspruchs 1 aufweisende Transportvorrichtung ist in der JP-A-55 24 854 offenbart.

Diese Transportvorrichtung zur Entsorgung von flüssigen Medien mit produktionsrückständen mit einem Auffangbehälter ist mit einer Transportpumpe, mit einer Siebeinrichtung und einer Austragseinrichtung versehen.

In der Praxis hat sich nun gezeigt, daß der Abtransport des flüssigen Mediums Probleme bereiten kann, wenn darin Feststoffe enthalten sind, die bezüglich ihrer Größe stark voneinander abweichen. Dies gilt z.B. für Späne oder andere Teilerückstände, wie z.B. Rohrendteile, Metall- und Stangenstücke u.dgl..

Der vorliegenden Erfindung liegt die Aufgabe zugrunde, das Entsorgungsverfahren selbst und eine dafür vorgesehene Vorrichtung der eingangs erwähnten Art dahingehend zu verbessern, daß der Abtransport des zu entsorgenden Mediums verbessert wird, insbesondere daß darin enthaltene Feststoffe auch bei stark voneinander abweichenden Größen problemlos abtransportiert werden können.

Erfindungsgemäß wird diese Aufgabe dadurch gelöst, daß sich an die Sieb- und Austragseinrichtung eine Zerkleinerungseinrichtung für nicht durch die Sieb- und Austragseinrichtung hindurch geförderte Grobteile anschließt, wobei diese nach ihrer Zerkleinerung dem Auffangbehälter zum Abtransport wieder zuführbar sind.

Durch die Sieb- und Austragseinrichtung mit der erfindungsgemäß nachgeschalteten Zerkleinerungseinrichtung wird eine Vergleichmäßigung und Vereinheitlichung von festen Bestandteilen, insbesondere von Spänen, auf einen bestimmten Größenbereich erreicht, wodurch der Abtransport wesentlich erleichtert wird. So können z.B. feste Bestandteile, die sich in dem gewünschten Gröβenbereich befinden, sofort das Sieb passieren, während gröbere Teile, die nicht hindurchgehen, wie vorstehend beschrieben anschließend in der Zerkleinerungseinrichtung entsprechend zerkleinert werden und danach wieder dem Hauptstrom zum Abtransport zugeführt werden können.

Als Sieb- und Austragseinrichtung, die ein Bauteil für Siebung und Austrag darstellt, können die verschiedenartigsten Einrichtungen dienen, wobei lediglich darauf zu achten ist, daß sie fur einen Transport und für einen Siebvorgang auf die zu siebenden und zu transportierenden Feststoffe ausgerichtet und dafür geeignet sind.

Als eine sehr gute Lösung hierfür hat sich ein Sternsieb herausgestellt, das mit einer Vielzahl von hintereinander und parallel zueinander angeordneten Walzen versehen ist. Dabei können die Walzen mit profilierten oder unprofilierten scheibenartigen Mitnehmern versehen sein. In bekannter Weise greifen dabei die Mitnehmer von benachbart zueinander liegenden Walzen kammartig ineinander ein, wobei kleinere Bestandteile die Möglichkeit haben, zwischen den Walzen und den Mitnehmern hindurchzufallen, während gröbere Bestandteile von der Sieb- und Austrageinrichtung weiter in Richtung auf einen Austrag hin transportiert werden. Der Transport der Späne wird dabei erleichtert, wenn vorgesehen ist, daß die Mitnehmer magnetisierbar oder magnetisch sind.

Bei einem Sieb dieser Art findet zusätzlich auch noch in einem bestimmten Maße eine Zerkleinerung statt, die gegebenenfalls noch von einem Rüttelvorgang unterstützt werden kann, womit der Siebvorgang und die Vereinheitlichung der Feststoffe noch verbessert wird.

In vorteilhafter Weise wird man die Sieb- und Austragseinrichtung zur Austrags- und Transportseite leicht ansteigend ausbilden.

Auf diese Weise wird ein guter Transport zum Auffangsende hin erreicht.

Von Vorteil ist es auch, wenn der Boden des Auffangbehälters zur Transportseite bzw. zum Austragsende hin geneigt ist bzw. abfällt.

Da die Feststoffe zusammen mit Kühl- und Behandlungsflüssigkeit ausgetragen werden, schwemmt damit die Flüssigkeit die durch das Sieb hindurchgetretenen Feststoffe sicher in Richtung Austragsseite und Transportpumpe hin.

Dieser Vorgang wird noch unterstützt und verbessert, wenn in einer weiteren Ausgestaltung der Erfindung vorgesehen ist, daß der Boden des Auffangbehälters rinnen- und/oder wannenartig mit erhöhten Seitenteilen ausgebildet ist.

Für die Zerkleinerung der nicht durch die Sieb- und Austragseinrichtung hindurchgetretenen Feststoffteile können die verschiedenartigsten Einrichtungen verwendet werden. In der Praxis hat sich ein Walzen- oder Trichterbrecher als sehr gut geeignet herausgestellt. Dabei sind eine oder mehrere Walzen mit hammer-, messer- oder keilartigen Mahl- und Brechgliedern zur Zerkleinerung versehen.

Von Vorteil ist es, wenn vorgesehen ist, daß hinter der Zerkleinerungseinrichtung ein Austragsteil für nicht zerkleinerte oder zerkleinerbare Grobteile angeordnet ist.

Auf diese Weise werden nicht zerkleinerte oder zerkleinerbare Bestandteile, wie z. B. Metallstäbe, Rohrendstücke, Stangenteile u.dgl., gezielt ausgetragen und können entsprechend zur Weiterverwertung oder Entsorgung gesammelt werden.

Je nach Anordnung und Materialzusammensetzung bzw. Materialgröße kann die Transportpumpe für den Weitertransport der ausgesiebten und zerkleinerten Feststoffteile, insbesondere Späne, zusammen mit der Flüssigkeit als Norm-, Block- oder Tauchpumpe mit offenem oder geschlossenem Laufrad ausgebildet sein.

In vorteilhafter Weise wird man die Walzen der Sieb- und Austragseinrichtung und ggf. auch die Walzen der Zerkleinerungseinrichtung, gemeinsam antreiben. Hierfür kann z. B. ein Getriebe, ein Keilriemen oder ein Kettenantrieb vorgesehen sein.

In einer vorteilhaften Ausgestaltung der Erfindung kann vorgesehen sein, daß der Aufnahmebehälter mit seiner Eingangsseite an das Maschinenbett einer zu entsorgenden Maschine angeflanscht ist.
Durch diese Ausgestaltung ist ein direkter Abtransport von Flüssigkeit und auszuscheidenden Feststoffen direkt von der Werkzeugmaschine, an der die Flüssigkeit und die Feststoffe anfallen, möglich.

Alternativ hierzu kann vorgesehen sein, daß der Auffangbehälter mit seiner Eingangsseite unter das Maschinenbett einer zu entsorgenden Maschine untergeschoben ist.

Nachfolgend ist ein Ausführungsbeispiel der Erfindung anhand der Zeichnung prinzipmäßig näher beschrieben.

Es zeigt:
- Fig. 1: eine Seitenansicht der erfindungsgemäßen Transport- und Zerkleinerungsvorrichtung
- Fig. 2: eine Draufsicht auf die Vorrichtung nach der Figur 1

An eine Werkzeugmaschine 1 für eine Naßbearbeitung, an der Späne anfallen, ist eine Transport- und Zerkleinerungseinrichtung mit einem Eintragsteil 2 angeflanscht. Das Eintragsteil 2 weist eine Vielzahl von hintereinander und parallel zueinander angeordneten Mitnehmern und Walzen 3 auf, die in gleicher Richtung rotieren und zwischen sich einen geringen Abstand lassen, durch den kleinere Späne sofort hindurchtreten können. Die Oberfläche der Siebeinrichtung im Bereich des Eintragsteiles 2 ist horizontal. Die in oder an der Werkzeugmaschine anfallende Flüssigkeit tritt ebenfalls zusammen mit den kleineren Spänen zwischen den Mitnehmern und Walzen 3 hindurch, sammelt sich auf dem Boden 7 eines Auffangbehälters 8 und übernimmt von dort aus den Abtransport der durch das Sieb gefallenen Späne.

An das Eintragsteil 2 schließt sich die eigentliche Sieb- und Austragseinrichtung 4 an, die ebenfalls eine Vielzahl von hintereinander und parallel zueinander angeordnete Mitnehmer und Walzen 5 aufweist, auf denen in axialem Abstand hintereinander über die Breite der Sieb- und Austragseinrichtung verteilt Metall- oder Hartgummischeiben 6 angeordnet sind. Die Anordnung der Metall- oder Hartgummischeiben 6 von benachbart zueinander liegenden Walzen 5 ist so gewählt, daß sie kammartig ineinander greifen, jedoch zwischen sich jeweils spaltförmige Öffnungen freilassen, durch die Späne hindurchtreten können. Durch die Sieb- und Austragseinrichtung 4 hindurchgetretene Späne fallen auf den Boden 7 des Auffangbehälters und werden durch die Flüssigkeit in Richtung auf eine Austrags- bzw. Transportseite 9 geschwemmt. Aus diesem Grunde ist der Boden 7 auch in Richtung auf die Austrags- bzw. Transportseite 9 geneigt und zusätzlich noch rinnen- und/oder wannenartig mit erhöhten Seitenwänden ausgebildet. Zur Verstarkung und zum besseren Abtransport des Flüssigkeits-Feststoffgemisches können zusätzlich noch Spüleinrichtungen 10 mit nicht näher dargestellten Spüldüsen vorgesehen sein, die Zusatzflüssigkeit in das Auffangbecken 8 einbringen.

Am Ende der ansteigenden Mitnehmer und Walzen 5 der Sieb- und Austragseinrichtung 4 schließen sich einige Abschlußwalzen an, unter denen sich als Zerkleinerungseinrichtung ein nicht näher dargestellter Walzen- oder Trichterbrecher 11 befindet. (In den Figuren sind beide Möglichkeiten schematisch angedeutet.) Durch den Walzen- oder Trichterbrecher 11 werden Grobspäne zerkleinert. Anschließend werden sie dem Hauptstrom wieder zugegeben und von der Austrags- bzw. Transportseite 9 aus über eine Transportpumpe 12 weitertransportiert. Hierzu werden diese seitlich oder unten aus dem Walzen- oder Trichterbrecher 11 mit seinen hammer- oder messerartigen Zerkleinerungsgliedern ausgeworfen und fallen anschließend auf den Boden 7, wo sie mit dem Flüssigkeitsstrom vermischt werden.

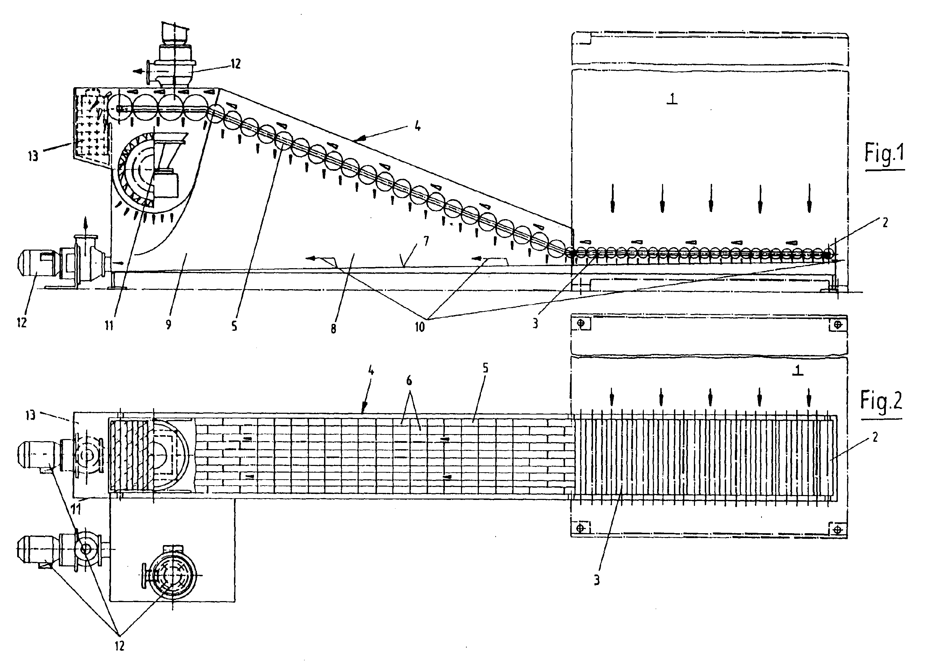

In die Fig. 1 und 2 sind zur Vereinfachung mehrere Anordnungsmöglichkeiten einer Transportpumpe 12 eingezeichnet. Selbstverständlich ist im Normalfall jedoch nur eine Pumpe und eventuell noch eine Reservepumpe vorhanden. Wie ersichtlich kann die Transportpumpe 12 in Verlängerung der Austrags- bzw. Transportseite 9 und des Boden 7 angeordnet sein. Ebenso kann sie seitlich angeflanscht sein (siehe Fig. 2), wobei in diesem Falle der Boden 7 in Richtung auf das angeflanschte Teil und die sich dort befindende Pumpe geneigt sein muß. Alternativ kann auch eine Transportpumpe 12 auf der Oberseite der Vorrichtung angeordnet sein, die über ein Tauchrohr die Flüssigkeit zusammen mit den Spänen von unten her von der Austrags- bzw. Transportseite 9 aus ansaugt.

Von der Transportpumpe 12 aus kann das Flüssigkeits-Feststoffgemisch in bekannter Weise über eine Hochleitung zu einem Einlaufhochbehälter transportiert werden. Hierzu wird auf die DE-OS 39 26 700 verwiesen.

Ganz grobe Teile, wie z. B. Stangenreste, die nicht durch den im Vergleich zu dem Abstand der Mitnehmer und Walzen 5 der vorangehenden Sieb- und Austragseinrichtung 4 grösseren Abstand zwischen den Abschlußwalzen hindurchtreten können, werden am Ende hinter dem letzten Mitnehmer und Walze in einen Grobteile-Korb 13 als Austragsteil ausgeworfen. In dem Grobteile-Korb 13 werden dann diese Teile gesammelt und/oder auf nicht näher dargestellte Weise abtransportiert.

Die Sieb- und Austragseinrichtung 4 und gegebenenfalls auch der Walzen- oder Trichterbrecher 11 können von einem gemeinsamen, nicht naher dargestellten Antrieb aus unter Zwischenschaltung einer oder mehrerer Getriebestufe(n) angetrieben werden. Für die Mitnehmer und Walzen 5 der Sieb- und Austragseinrichtung 4 wird man im allgemeinen Drehzahlen zwischen 30-50 U/min verwenden, während der oder die Mitnehmer und Walzen der Walzen- oder Trichterbrecher 11 z. B. mit 30 U/min rotieren können. Selbstverständlich sind die vorstehend genannten Werte jedoch nur beispielsweise genannt und können in Abhängigkeit von den Gegebenheiten noch variiert werden. Ebenso können auch mehrere Antriebseinrichtungen vorgesehen sein.

Es besteht auch die Möglichkeit, die Zerkleinerungseinrichtung mit der Sieb- und Austragseinrichtung gleichzeitig zu betreiben oder je nach Anfall über eine optische Uberwachung zuzuschalten.

## Patentansprüche

1. Transport- und Zerkleinerungsvorrichtung zur Entsorgung von flüssigen Medien mit Produktionsrückständen, wie Späne, Kühl- und Schmiermittel, aus der Industrie, mit einem Auffangbehälter (8), der mit einer Transportpumpe (12) versehen ist, und auf den eine Sieb- und Austragseinrichtung (4) zum Sieben des Mediums und zum Transportieren der gröberen Bestandteile in Richtung auf einen Austrag, aufgesetzt ist,
**dadurch gekennzeichnet,** daß
sich an die Sieb- und Austragseinrichtung (4) eine Zerkleinerungseinrichtung (11) für nicht durch die Sieb- und Austragseinrichtung hindurch geförderte Grobteile anschließt, wobei diese nach ihrer Zerkleinerung dem Auffangbehälter (8) zum Abtransport wieder zufuhrbar sind.

2. Transport- und Zerkleinerungsvorrichtung nach Anspruch 1,
**dadurch gekennzeichnet**, daß
als Siebeinrichtung (4) ein Sternsieb mit einer Vielzahl von hintereinander und parallel angeordneten Mitnehmern und Walzen (5) vorgesehen ist.

3. Transport- und Zerkleinerungsvorrichtung nach Anspruch 2,
**dadurch gekennzeichnet**, daß
die Mitnehmer und Walzen (5) mit magnetisierten profilierten oder unprofilierten scheibenartigen Mitnehmern (6) versehen sind.

4. Transport- und Zerkleinerungsvorrichtung nach Anspruch 3,
**dadurch gekennzeichnet**, daß
die Mitnehmer (6) magnetisierbar oder magnetisch sind.

5. Transport- und Zerkleinerungsvorrichtung nach Anspruch 3,
**dadurch gekennzeichnet**, daß
die Mitnehmer mit Metall, Kunststoff oder Hartgummi versehene Scheiben (6) sind.

6. Transport- und Zerkleinerungsvorrichtung nach einem der Ansprüche 1 bis 5,
**dadurch gekennzeichnet**, daß
die Sieb- und Austragseinrichtung (4) von der Eintragsseite (2) zur Austrags- bzw. Transportseite (9) hin ansteigend ausgebildet ist.

7. Transport- und Zerkleinerungsvorrichtung nach einem der Ansprüche 1 bis 6,
**dadurch gekennzeichnet**, daß
der Boden (7) des Auffangbehälters (8) in Richtung zur Austrags- bzw. Transportseite (9) hin abfallend ausgebildet ist.

8. Transport- und Zerkleinerungsvorrichtung nach Anspruch 7,
**dadurch gekennzeichnet**, daß
der Boden (7) des Auffangbehälters (8) rinnen- und/oder wannenartig mit erhöhten Seitenteilen ausgebildet ist.

9. Transport- und Zerkleinerungsvorrichtung nach einem der Ansprüche 1 bis 8,
**dadurch gekennzeichnet**, daß
die Zerkleinerungseinrichtung mit einem Walzen- oder Trichterbrecher (11) versehen ist.

10. Transport- und Zerkleinerungsvorrichtung nach einem der Ansprüche 1 bis 9,
**dadurch gekennzeichnet,** daß
hinter der Zerkleinerungseinrichtung (11) ein Austragsteil (13) für nicht zerkleinerte oder unzerkleinerbare Grobteile angeordnet ist.

11. Transport- und Zerkleinerungsvorrichtung nach einem der Ansprüche 1 bis 10,
**dadurch gekennzeichnet**, daß
die Transportpumpe (12) als Norm-, Block- oder Tauchpumpe mit offenem oder geschlossenem Laufrad ausgebildet ist.

12. Transport- und Zerkleinerungsvorrichtung nach einem der Ansprüche 2 bis 11,
**dadurch gekennzeichnet**, daß
die Walzen (3,5) gemeinsam von einem Kettenantrieb aus angetrieben sind.

13. Transport- und Zerkleinerungsvorrichtung nach einem der Ansprüche 1 bis 12,
**dadurch gekennzeichnet**, daß
der Aufnahmebehälter (8) mit seiner Eingangsseite (2) an das Maschinenbett einer zu entsorgenden Maschine (1) angeflanscht oder unter das Maschinenbett einer zu entsorgenden Maschine (1) untergeschoben ist.

## Claims

1. Transport and crushing device for the disposal of liquid media containing production residues, such as chips, coolants and lubricants, from industry, comprising a collecting vessel (8) which is provided with a transport pump (12) and on which a screening and discharge means (4) for screening the medium and for transporting the coarser constituents towards an outlet is placed, characterised in that a crushing means (11) for coarse parts not passing through the screening and discharge means is connected to the screening and discharge means (4), wherein, after crushing thereof, these coarse parts can be fed back to the collecting vessel (8) for removal.

2. Transport and crushing device according to claim 1, characterised in that a star screen with a plurality of carriers and rolls (5) arranged behind one another and in parallel is provided as the screening means (4).

3. Transport and crushing device according to claim 2, characterised in that the carriers and rolls (5) are provided with magnetised, profiled or unprofiled disc-shaped carriers (6).

4. Transport and crushing device according to claim 3, characterised in that the carriers (6) are magnetisable or magnetic.

5. Transport and crushing device according to claim 3, characterised in that the carriers are discs (6) provided with metal, plastic or hard rubber.

6. Transport and crushing device according to one of claims 1 to 5, characterised in that the screening and discharge means (4) slopes upwards from the inlet side (2) to the outlet or transport side (9).

7. Transport and crushing device according to one of claims 1 to 6, characterised in that the base (7) of the collecting vessel (8) slopes downwards in the direction of the outlet or transport side (9).

8. Transport and crushing device according to claim 7, characterised in that the base (7) of the collecting vessel (8) is channel-shaped and/or trough-shaped with raised side parts.

9. Transport and crushing device according to one of claims 1 to 8, characterised in that the crushing means is provided with a roll or funnel crusher (11).

10. Transport and crushing device according to one of claims 1 to 9, characterised in that an outlet part (13) for coarse parts which have not been crushed or cannot be crushed is arranged behind the crushing means (11).

11. Transport and crushing device according to one of claims 1 to 10, characterised in that the transport pump (12) is a standard, close coupled or submerged pump with an open or closed impeller.

12. Transport and crushing device according to one of claims 2 to 11, characterised in that the rolls (3, 5) are driven together by a chain drive.

13. Transport and crushing device according to one of claims 1 to 12, characterised in that the collecting vessel (8) is flanged via its inlet side (2) to the bed of a machine (1) from which waste is to be removed or is pushed under the bed of a machine (1) from which waste is to be removed.

## Revendications

1. Dispositif de transport et de broyage pour évacuer des liquides contenant des résidus de production de l'industrie, tels que des copeaux, des produits de refroidissement et de lubrification, le dispositif comportant un réservoir collecteur (8) équipé d'une pompe de transport (12) et au-dessus duquel est placé un appareil de criblage et d'extraction (4) pour cribler le liquide et transporter les composants plus grossiers en direction d'une sortie, **caractérisé** en ce que l'appareil de criblage et d'extraction (4) est suivi d'un appareil de broyage (11) d'éléments grossiers qui n'ont pas passé à travers l'appareil de criblage et d'extraction, ces éléments étant susceptibles d'être conduits, après leur broyage, au réservoir collecteur (8) pour être emportés.

2. Dispositif selon la revendication 1, **caractérisé** en ce qu'il est prévu, en guise d'appareil de criblage (4), un crible à étoiles comportant une pluralité d'éléments entraîneurs et de rouleaux (5) disposés les uns derrière les autres et en parallèle.

3. Dispositif selon la revendication 2, **caractérisé** en ce que les éléments entraîneurs et les rouleaux (5) comportent des éléments entraîneurs magnétisés (6) en forme de disques profilés ou non profilés .

4. Dispositif selon la revendication 3, **caractérisé** en ce que les éléments entraîneurs (6) sont magnétisables ou magnétiques.

5. Dispositif selon la revendication 3, **caractérisé** en ce que les éléments entraîneurs sont des disques (6) garnis de métal, de matière synthétique ou de caoutchouc durci.

6. Dispositif selon l'une des revendications 1 à 5, **caractérisé** en ce que l'appareil de criblage et d'extraction (4) a une configuration montante du côté entrée (2) au côté de sortie et de transport (9).

7. Dispositif selon l'une des revendications 1 à 6, **caractérisé** en ce que le fond (7) du réservoir collecteur (8) a une configuration descendante en direction du côté de sortie et de transport (9).

8. Dispositif selon la revendication 7, **caractérisé** en ce que le fond (7) du réservoir collecteur (8) a une configuration en rigole et/ou en cuvette avec des parties latérales surélevées.

9. Dispositif selon l'une des revendications 1 à 8, **caractérisé** en ce que l'appareil de broyage est pourvu d'un broyeur à cylindres ou giratoire (11).

10. Dispositif selon l'une des revendications 1 à 9, **caractérisé** en ce qu' un organe de sortie (13) est disposé derrière l'appareil de broyage (11) pour recevoir des éléments grossiers non broyés ou non susceptibles d'être broyés.

11. Dispositif selon l'une des revendications 1 à 10, **caractérisé** en ce que la pompe de transport (12) est une pompe normale, une pompe monobloc ou une pompe immergée à roue ouverte ou fermée.

12. Dispositif selon l'une des revendications 2 à 11, **caractérisé** en ce que les rouleaux (3, 5) sont entraînés en commun par un entraînement à chaîne.

13. Dispositif selon l'une des revendications 1 à 12, **caractérisé** en ce que le côté d'entrée (2) du réservoir récepteur (8) est raccordé à la base d'une machine (1) d'où s'effectue l'évacuation, ou est inséré sous la base d'une telle machine (1).
